# EUROPÄISCHE PATENTSCHRIFT

(11) **EP 4 668 157 B1**
(45) Veröffentlichungstag und Bekanntmachung des Hinweises auf die Patenterteilung: **28.10.2026**
(21) Anmeldenummer: 24183422.5
(22) Anmeldetag: 20.06.2024
(51) Int. Cl.: G06K 7/00, G05B 19/418, G06K 7/10

(54) **VORRICHTUNG UND VERFAHREN ZUM ERKENNEN VON BESTIMMTEN PRODUKTIONSMITTELN AN EINER PRODUKTIONSMASCHINE**
DEVICE AND METHOD FOR DETECTING SPECIFIC PRODUCTION MEANS ON A PRODUCTION MACHINE
DISPOSITIF ET PROCÉDÉ DE DÉTECTION DE CERTAINS MOYENS DE PRODUCTION SUR UNE MACHINE DE PRODUCTION

(43) Veröffentlichungstag der Anmeldung: 24.12.2025
(73) Patentinhaber: Pepperl+Fuchs SE, 68307 Mannheim (DE)
(72) Erfinder: Schmitt, Martin, 76889 Steinfeld (DE); Kühn, Thomas, 68219 Mannheim (DE)
(74) Vertreter: Banse & Steglich Patentanwälte PartmbB

(56) Entgegenhaltungen:
- EP-A1- 3 273 381
- EP-A1- 3 809 309
- CN-A- 113 255 385
- DE-A1- 102020 119 277

## Beschreibung

### Technisches Gebiet

Die Erfindung betrifft Produktionsmaschinen, und insbesondere Produktionsmaschinen, die unterschiedliche Arten von Produktionsmitteln, wie z. B. Werkzeugen oder Verbrauchsmaterialien, an zwei örtlich getrennten Produktionsmittelaufnahmen nutzen können. Die Erfindung betrifft weiterhin Verfahren zum Lokalisieren von verschiedenen Produktionsmitteln in Produktionsmittelaufnahmen einer Produktionsmaschine. Weiterhin betrifft die vorliegende Erfindung ein Verfahren zum kontaktlosen Lokalisieren eines Identifikationselements an einem Produktionsmittel mithilfe eines Detektionsgeräts.

### Technischer Hintergrund

Zur automatischen Erkennung und Identifikation der Art eines wählbaren Produktionsmittels, das in eine Produktionsmaschine eingesetzt wird, wird die Produktionsmaschine in der Regel mit einem Detektionsgerät versehen. Das Detektionsgerät ist in der Lage, ein Identifikationselement an dem Produktionsmittel zu erkennen und eine Identifikationsinformation daraus aus- oder abzulesen.

Das Identifikationselement ist häufig als elektronisch lesbarer RFID-Transponder (RFID = Radio Frequency Identification Transponder) ausgebildet. Typischerweise sind diese RFID-Transponder passiv und werden mithilfe eines RFID-Lesegeräts als Detektionsgerät ausgelesen. Das RFID-Lesegerät sendet über eine Schleifenantenne ein Anregungssignal in Form eines hochfrequenten elektromagnetischen Felds aus, das der Transponder mithilfe einer Empfangsspule empfängt. Das empfangene Anregungssignal wird entsprechend einer im RFID-Transponder gespeicherten Identifikationsinformation moduliert. Das modulierte Antwortsignal kann durch das RFID-Lesegerät erfasst werden. Die Identifikationsinformation im Antwortsignal kann vom Lesegerät ausgewertet und in der Produktionsmaschine bereitgestellt werden. Ein Produktionsmittel, an dem ein solcher RFID-Transponder angebracht ist, kann somit eindeutig identifiziert werden.

Je nach Art des erkannten Produktionsmittels kann der Betrieb der Produktionsmaschine gesteuert oder zugelassen oder blockiert werden.

Können mehrere gleichartige Produktionsmittel in entsprechende Produktionsmittelaufnahmen einer Produktionsmaschine eingesetzt werden, so wird dafür in der Regel jeweils ein RFID-Lesegerät benötigt, um die jeweilige Identifikationsinformation eines Produktionsmittels in der entsprechenden Produktionsmittelaufnahme auszulesen. Dies stellt einen hohen Bauteil- und Konstruktionsaufwand dar.

Aus der Druckschrift EP3809309A1 ist ein Lagersystem bekannt, umfassend: Ablagefächern und/oder Ablageorten zum Lagern von Waren- mit wenigstens einer Vorrichtung zur Erfassung eines Zugriffs auf die Ablagefächer und/oder die Ablageorte, bei dem jedes Ablagefach/Ablageort wenigstens einen diesem Ablagefach oder Ablageort zugeordneten RFID-Transponder aufweist, bei dem die Vorrichtung zur Erfassung des Zugriffs mit Befestigungsmitteln an einer Person befestigbar ist, bei dem die Vorrichtung zur Erfassung wenigstens ein RFID-Schreib-/Lesegerät oder ein RFID-Lesegerät aufweist, bei dem das RFID-Schreib-/Lesegerät oder das RFID-Lesegerät als ein wenigstens einen RSSI-Wert (Received Signal Strength Indicator) der Transponderantworten erfassendes und auswertendes RFID-Schreib-/Lesegerät oder RFID-Lesegerät ausgebildet ist.

Die Druckschrift DE 10 2020 119 277 A1·offenbart eine Vorrichtung zum Orten mehrerer Produktionsmittel einer Druckmaschine oder eines nachgelagerten Verarbeitungsprozesses, wobei die Vorrichtung zum Orten der mehreren Produktionsmittel zumindest ein Ortungssystem mit zumindest einem Empfänger und zumindest einen Sender aufweist, wobei die mehreren Produktionsmittel jeweils zumindest eine spezifische Information aufweisen.

Die Druckschrift CN 113 255 385 A1 offenbart ein Verfahren zur Identifizierung von Tabletts. Das Verfahren umfasst die folgenden Schritte: innerhalb einer festgelegten Zeit, nachdem eine Tablett-Erkennungsvorrichtung erkennt, dass mindestens ein Tablett in einen Identifikationsbereich eintritt, Lesen eines Tablett-Etiketts des Identifikationsbereichs gemäß einer festgelegten Frequenz durch einen Radiofrequenz-Identifikations (RFID)-Leser-Schreiber; Aufzeichnen der empfangenen Signalstärke RSSI jedes jedes gelesenen Tablett-Etiketts; und Identifizieren des Zieltabletts gemäß der RSSI jedes gelesenen Tablett-Etiketts und der Lesenummer jedes Tablett-Etiketts.

Die Druckschrift EP 3 273 381 A1 offenbart eine RFID-Vorrichtung zum Kommunizieren mit mindestens einem RFID-Transponder, die einen RFID-Transceiver zum Abstrahlen und Empfangen von RFID-Signalen und eine Steuerungseinheit aufweist, die dafür ausgebildet ist, gemäß einem RFID-Protokoll eine RFID-Information in das RFID-Signal zu codieren oder aus dem RFID-Signal auszulesen und in der ein Vereinzelungsverfahren implementiert ist, um einen Befehl jeweils nur einem RFID-Transponder zu geben, wobei das Vereinzelungsverfahren einen Kommunikationsparameter des RFID-Signals selbst prüft, der von in dem RFID-Signal codierten RFID-Informationen unabhängig ist.

Es ist daher Aufgabe der vorliegenden Erfindung, eine Produktionsmaschine mit einer verbesserten Erkennung der Art von in Produktionsmittelaufnahmen eingesetzten Produktionsmitteln zur Verfügung zu stellen, bei der der Realisierungsaufwand für die Erkennung reduziert werden kann.

### Offenbarung der Erfindung

Diese Aufgabe wird durch die Produktionsmaschine zur Herstellung oder Weiterverarbeitung eines Produktes mithilfe von Produktionsmitteln verschiedener Eigenschaften gemäß Anspruch 1 sowie ein Verfahren zum Betreiben einer Produktionsmaschine gemäß dem nebengeordneten Anspruch gelöst.

Weitere Ausgestaltungen sind in den abhängigen Ansprüchen angegeben.

Gemäß einem ersten Aspekt ist eine Anordnung zur Identifikation eines oder mehrerer Produktionsmittel, die jeweils mit einem RFID-Transponder versehen sind, vorgesehen, umfassend:
- Ein RFID-Lesegerät zum Anordnen an dem einen oder den mehreren Produktionsmitteln, das ausgebildet ist, um von jedem der RFID-Transponder des einen oder der mehreren Produktionsmittel jeweils ein Antwortsignal zu empfangen und jeweils die Amplitude des Antwortsignals zu erfassen;
- eine Steuereinheit, die ausgebildet ist, um abhängig von der Amplitude des jeweiligen Antwortsignals dem Produktionsmittel eine Produktionsmittelaufnahme, in der dieses eingesetzt ist, oder eine Art oder Identifikation des Produktionsmittels zuzuordnen.

Gemäß einem weiteren Aspekt ist eine Verwendung der obigen Anordnung in einer Produktionsmaschine vorgesehen, wobei die Amplitude und eine zugeordnete Identifikationsinformation des jeweiligen Antwortsignals durch das RFID-Lesegerät erfasst wird, wobei die Amplitude jeder der Antwortsignale einer Produktionsmittelaufnahme der Produktionsmaschine zugeordnet wird, wobei die Produktionsmaschine abhängig von der Art bzw. der Identifikation des jeweiligen Produktionsmittels, die durch die Identifikationsinformation bestimmt ist, und abhängig von der zugeordneten Produktionsmittelaufnahme betrieben wird.

Gemäß einem weiteren Aspekt ist eine Produktionsmaschine zur Herstellung oder Weiterverarbeitung eines Produktes mithilfe von verschiedenen Arten von Produktionsmitteln vorgesehen; umfassend:
- Mindestens zwei voneinander beabstandete Produktionsmittelaufnahmen, die jeweils ausgebildet sind, eine bestimmte Art eines Produktionsmittels aufzunehmen, wobei das jeweilige Produktionsmittel eines von mehreren Produktionsmitteln der bestimmten Art ist;
- Ein RFID-Lesegerät, das so zwischen den Produktionsmittelaufnahmen angeordnet oder ausgebildet ist, um ein Antwortsignal eines an dem Produktionsmittel angebrachten RFID-Transponders zu empfangen, wobei das RFID-Lesegerät so ausgebildet oder angeordnet ist, dass abhängig davon, in welcher der Produktionsmittelaufnahmen das Produktionsmittel angeordnet ist, das Antwortsignal mit unterschiedlicher Amplitude empfangen wird.

Produktionsmaschinen nutzen zur Weiterverarbeitung oder Herstellung eines Produkts Produktionsmittel. Ein Produktionsmittel kann ein Werkzeug sein, wie beispielsweise ein Bohrer, ein Fräskopf oder dergleichen, und kann auch ein Verbrauchsmaterial oder Versorgungsmaterial sein, wie ein flüssiges Versorgungsmaterial, wie beispielsweise Farbe, Schmiermittel oder ähnliches, oder zu verbauende Bauteile, wie beispielsweise Schrauben, Klammern, elektronische Komponenten und dergleichen. Die Bauteile können in entsprechenden Transporteinrichtungen, wie Rollen oder Behälter bereitgestellt werden. Sowohl Werkzeuge als auch Versorgungsmaterial werden in entsprechende Aufnahmeeinrichtungen der Produktionsmaschine, d. h. Produktionsmittelaufnahmen, eingesetzt, um durch die Produktionsmaschine genutzt bzw. dem Verarbeitungsprozess, der durch die Produktionsmaschine ausgeführt wird, zugeführt zu werden. Gleichartige Werkzeuge sowie gleichartige Versorgungsmaterialien können unterschiedliche Eigenschaften aufweisen, wie z. B. Bohrer mit unterschiedlichen Durchmessern, oder flüssiges Versorgungsmaterial, wie z. B. Lacke unterschiedlicher Farben, oder stückiges Versorgungsmaterial auf Rollen oder Spulen, wie z. B. Klammerspulen oder -rollen oder dergleichen.

Bei Produktionsmaschinen, die hinsichtlich der verwendeten Produktionsmittel konfiguriert werden können, kann zur elektronischen Identifikation der Art des eingesetzten Produktionsmittels und zur entsprechenden Steuerung des Betriebs der Produktionsmaschine ein an dem Produktionsmittel angebrachter RFID-Transponder elektronisch erfasst werden. Der RFID-Transponder ist mit einer Informationsinformation codiert, die die Art des entsprechenden Produktionsmittels, an dem dieser angebracht ist, eindeutig angibt. Der RFID-Transponder kann mit einem RFID-Lesegerät erkannt und ausgelesen werden. Das RFID-Lesegerät gibt dann die ausgelesene Identifikationsinformation an eine Steuereinheit der Produktionsmaschine weiter.

Häufig sind an Produktionsmaschinen mehrere Produktionsmittelaufnahmen vorgesehen, die sich zur Aufnahme von gleichartigen aber nicht immer identischen Produktionsmitteln eignen. Daher ist es herkömmlich notwendig, an jeder Position einer Produktionsmittelaufnahme, an der ein Werkzeug oder ein Versorgungsmaterial eingesetzt werden kann, ein RFID-Lesegerät vorzusehen, um den entsprechenden RFID-Transponder an dem Produktionsmittel auszulesen und so die Art oder den Typ des eingesetzten Produktionsmittels zu identifizieren.

Bei Produktionsmaschinen mit einer Vielzahl derartiger Produktionsmittelaufnahmen für gleichartige Produktionsmittel, d. h. z. B. ein Mittel gleicher Nutzungsart aber mit mehreren möglichen Ausprägungen oder Eigenschaften, z. B. verschiedene Bohrer unterschiedlicher Größe und/oder für unterschiedliche Materialien, verschiedene Lacke mit unterschiedlichen Viskositäten und/oder Farben, oder verschiedene Versorgungsspulen mit unterschiedlichen Stückbauteilen, ist dadurch ein erhöhter technischer Aufwand erforderlich, um die aktuelle Konfiguration von eingesetzten Produktionsmitteln zu erkennen. Daher werden die obige Anordnung und Produktionsmaschine vorgeschlagen, nur ein einziges RFID-Lesegerät zur Erfassung von zwei gleichartigen Produktionsmitteln in entsprechenden Produktionsmittelaufnahmen vorzusehen, wobei sich die Produktionsmittel nicht durch die Art der Produktionsmittelaufnahme unterscheiden lassen. Mit anderen Worten, die Produktionsmittel könnten auch vertauscht in die Produktionsmittelaufnahmen eingesetzt werden.

Die erfindungsgemäße Produktionsmaschine nutzt die Möglichkeit, mithilfe eines RFID-Lesegeräts die Anordnung von Produktionsmitteln in und/oder die Belegung von zwei benachbarten Produktionsmittelaufnahmen zu erfassen und eine eindeutige Identifikation des eingesetzten Produktionsmittels, d.h. des jeweils eingesetzten Werkzeugs oder des jeweils eingesetzten Versorgungsmaterials, zu bestimmen. Dazu kann ein RFID-Lesegerät so zwischen zwei Produktionsmittelaufnahmen angeordnet sein, dass das in den Produktionsmittelaufnahmen eingesetzte Produktionsmittel mit ihren jeweiligen RFID-Transpondern zu unterschiedlichen Empfangsamplituden des Antwortsignals beim Auslesen der Identifikationsinformation führt.

Das RFID-Lesegerät kann eine Schleifenantenne aufweisen, die außerhalb der Mittenposition angeordnet ist, wobei die Mittenposition definiert ist, so dass die RFID-Transponder an den Produktionsmitteln in einem in den Produktionsmittelaufnahmen eingesetzten Zustand unterschiedliche Abstände zu der Schleifenantenne aufweisen. Mit anderen Worten, es kann dazu die Schleifenantenne des RFID-Lesegeräts außerhalb der Mittenposition zwischen den Positionen der RFID-Transpondern der Produktionsmittel, die in die entsprechenden Produktionsmittelaufnahmen eingesetzt oder einsetzbar sind, angeordnet sein.

Das Auslesen eines RFID-Transponders mithilfe eines Lesegeräts erfolgt durch das Manchester-Protokoll. Dazu wird ein Sendesignal einer vorgegebenen Frequenz von z. B. 13,56 MHz über eine Schleifenantenne ausgesendet. Dieses wird durch eine Empfangsspule im Transponder empfangen. Eine Transponderlogik moduliert das empfangene Signal entsprechend einer Identifikationsinformation gemäß einer Vorgabe des Manchester-Protokolls und sendet dieses als Antwortsignal an das RFID-Lesegerät. Das Antwortsignal wird dann in der RFID-Lesegerät ausgewertet. Befinden sich mehrere RFID-Transponder im Empfangsbereich des RFID-Lesegeräts, so erfolgt eine Multitagfähige Kommunikation z.B. entsprechend ISO15693-3. Die Kommunikation entspricht einer Nahbereichskommunikation, wobei die Amplitude des empfangenen Antwortsignals von dem Abstand zwischen der Schleifenantenne des RFID-Lesegeräts und der Antenne des RFID-Transponders abhängt.

Die RFID-Transponder befinden sich beim Einsetzen des jeweiligen Produktionsmittels an vorgegebenen Positionen in der Produktionsmaschine. Die Schleifenantenne ist so angeordnet, dass bei Auslesen der RFID-Transponder der eingesetzten Produktionsmittel für jedes Produktionsmittel das Antwortsignal mit unterschiedlicher Signalstärke empfangen wird. Da der Abstand zu den RFID-Transpondern des Produktionsmittels in der jeweiligen Produktionsmittelaufnahme festgelegt ist, kann eine Angabe darüber gemacht werden, auf welcher Seite der Schleifenantenne des RFID-Lesegeräts sich der betreffende RFID-Transponder befindet und somit welche Art des Produktionsmittels in die betreffende Produktionsmittelaufnahme eingesetzt ist.

Weiterhin kann vorgesehen sein, dass das RFID-Lesegerät eine Schleifenantenne aufweist, die einseitig mit einem Abschirmungselement versehen ist, die geeignet ist, das Sende- und Antwortsignal zu dämpfen, so dass aufgrund einer Signaldämpfung Antwortsignale von den RFID-Transpondern an den Produktionsmitteln in einem in den Produktionsmittelaufnahmen eingesetzten Zustand unterschiedliche Signalstärken abhängig von der Seite der Schleifenantenne haben, an der der RFID-Transponder des entsprechenden Antwortsignals angeordnet ist.

So kann die Schleifenantenne des RFID-Lesegeräts auch einseitig mit einer leitenden Schicht überdeckt sein, die einen Schichtwiderstand aufweist, der keine vollständige Abschirmung des RFID-Empfangssignals bewirkt. Somit kann auch die mittige Anordnung der Schleifenantenne des RFID-Lesegeräts zwischen den RFID-Transpondern zu unterschiedlichen Amplituden des Antwortsignals führen.

Weiterhin kann vorgesehen sein, dass das RFID-Lesegerät ausgebildet ist, die Amplitude des Antwortsignals und eine zugeordnete Identifikationsinformation zu erfassen, wobei eine Steuereinheit ausgebildet ist, um abhängig von der Amplitude des Antwortsignals dem Produktionsmittel eine Produktionsmittelaufnahme, in der diese eingesetzt ist, zuzuordnen und die Produktionsmaschine abhängig von der Art des jeweiligen Produktionsmittels, die durch die Identifikationsinformation bestimmt ist, zu betreiben.

In einer Steuereinheit der Produktionsmaschine kann dann abhängig von der Amplitude bzw. den Amplituden des Antwortsignals zunächst erkannt werden, welche der Produktionsmittelaufnahmen belegt ist, und bei beidseitiger Belegung können durch eine nacheinander seriell erfolgende Auslesung der Identifikationsinformationen des RFID-Transponders die einzelnen RFID-Transponder der Produktionsmittel ausgelesen werden. Über die Amplitude des jeweiligen Antwortsignals kann eine Zuordnung der Identifikationsinformationen des RFID-Transponders und der Seite bezogen auf das RFID-Lesegerät, auf der sich der RFID-Transponder und damit das Produktionsmittel befindet, erkannt werden. Somit können mithilfe eines einzelnen RFID-Lesegeräts die Belegung von mindestens zwei Produktionsmittelaufnahmen einer Produktionsmaschine und das eindeutige Erkennen der Art des eingesetzten Produktionsmittels durchgeführt werden.

Gemäß einem weiteren Aspekt ist ein Verfahren zum Betreiben einer Produktionsmaschine zur Herstellung oder Weiterverarbeitung eines Produktes mithilfe von verschiedenen Arten von Produktionsmitteln vorgesehen, wobei die Produktionsmaschine mindestens zwei voneinander beabstandete Produktionsmittelaufnahmen umfasst, die jeweils ausgebildet sind, eine bestimmte Art eines Produktionsmittels aufzunehmen, wobei das jeweilige Produktionsmittel eines von mehreren Produktionsmitteln der bestimmten Art ist und weiterhin ein RFID-Lesegerät umfasst, das so zwischen den Produktionsmittelaufnahmen angeordnet oder ausgebildet ist, um ein Antwortsignal eines an dem Produktionsmittel angebrachten RFID-Transponder zu empfangen, wobei das RFID-Lesegerät so ausgebildet oder angeordnet ist, dass abhängig davon, in welcher der Produktionsmittelaufnahmen das Produktionsmittel angeordnet ist, das Antwortsignal mit unterschiedlicher Amplitude empfangen wird; mit folgenden Schritten:
- Erfassen der Amplitude des Antwortsignals eines oder mehrerer RFID-Transponder;
- Zuordnen des Antwortsignals zu dem Produktionsmittel in der durch die Amplitude bestimmten Produktionsmittelaufnahme,
- Betreiben der Produktionsmaschine abhängig von der Art des jeweiligen Produktionsmittels, die durch die Identifikationsinformation bestimmt ist, und abhängig von der zugeordneten Produktionsmittelaufnahme.

### Kurzbeschreibung der Zeichnungen

Ausführungsformen werden nachfolgend anhand der beigefügten Zeichnungen näher erläutert. Es zeigen:
- Figur 1: eine schematische Darstellung einer Produktionsmaschine als Beispiel einer Beutelfüllmaschine, bei der ein Füllgut in Schlauchbeutel verpackt wird; und
- Figur 2: ein Flussdiagramm zur Veranschaulichung eines Verfahrens zum Betreiben der Produktionsmaschine.

### Beschreibung von Ausführungsformen

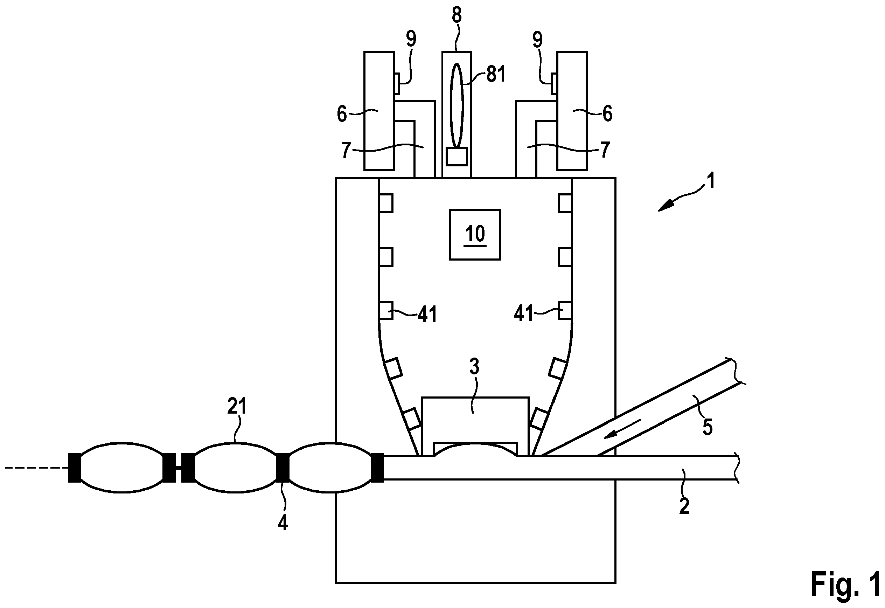

Figur 1 zeigt schematisch eine Beutelfüllmaschine 1 als Produktionsmaschine, die ein Füllgut, beispielsweise Lebensmittel, ein pastöses Material oder dergleichen, in ein Schlauchstück eines Schlauches 2 abfüllt. Der Schlauch 2 wird stückweise befüllt und beidseitig einer abgefüllten Portion mithilfe eines Werkzeugs 3 und jeweils einer Klammer 4 abgeklemmt, um so vordefinierte Beutel 21 vordefinierter Größe zu schaffen. Zwischen zwei so abgepackten Beuteln 21 werden zwei Klammern 4 vorgesehen, um die Beutel 21 durch einen anschließenden Trennvorgang zwischen den beiden Klammern 4 voneinander zu trennen.

Für die Produktion wird der Beutelfüllmaschine 1 das Füllgut 5 und der Schlauch 2 zugeführt.

Weiterhin werden für die Produktion Klammerrohlinge 41 als Produktionsmittel zugeführt, mit denen die Beutel 21 an ihren Enden abgeklemmt werden, um diese zu verschließen. Je nach Art der Verpackung können die Klammern 4 an den beiden Enden eines herzustellenden Beutels 21 unterschiedlich sein. Die Klammerrohlinge 41 werden über Spulen 6 der Beutelfüllmaschine 1 zugeführt. Die Spulen 6 enthalten jeweils eine Rolle mit einem Band, auf dem die Klammerrohlinge 41 befestigt oder angeordnet sind. Es können zwei Spulenaufnahmen 7 (Produktionsmittelaufnahmen) für die Klammerspulen 6 als Produktionsmittelaufnahmen vorgesehen sein, die in der Beutelfüllmaschine 1 entsprechend Klammerrohlinge 41 zuführen. Die Spulen 6 sind an den jeweiligen Spulenaufnahmen 7 drehbar befestigt, so dass diese abgewickelt werden können, um die Klammerrohlinge 41 auf dem Band jeweils dem Produktionsprozess zuzuführen.

Die Beutelfüllmaschine 1 kann in der Regel eine Vielzahl von verschiedenen Arten (Größen, Formen und/oder Materialien) von Klammerrohlingen 41 verarbeiten. Auch kann die Beutelfüllmaschine 1 für den Anfang und das Ende eines Beutels unterschiedliche Klammern 4 vorsehen und dazu unterschiedliche Klammerrohlinge 41 nutzen.

Zwischen den Spulenaufnahmen 7 der Beutelfüllmaschine 1 ist ein RFID-Lesegerät 8 angeordnet ist. Das RFID-Lesegerät 8 weist eine Empfangsspule als Schleifenantenne 81 und eine Logikeinheit auf. Die axiale Richtung der Schleifenantenne 81 weist in Richtung der Klammerspulen 6, wenn diese in der Spulenaufnahme 7 angeordnet sind. Das RFID-Lesegerät 8 kann mit seiner Schleifenantenne 81 so angeordnet sein, dass ein an der Klammerspule 6 jeweils angeordneter oder seitlich aufgebrachter RFID-Transponder 9 einen unterschiedlichen Abstand zu der Schleifenantenne 81 aufweist.

Die Logikeinheit ist ausgebildet, um ein Sendesignal anzugeben. Dieses wird durch den RFID-Transponder 9 entsprechend einer eindeutigen Identifikationsinformation moduliert und ein moduliertes Antwortsignal an das RFID-Lesegerät 8 übertragen. Da die Signalstärke von dem Abstand zwischen der Schleifenantenne 81 und dem RFID-Transponder abhängt, wird das modulierte Antwortsignal jeweils mit einer Amplitude empfangen, die von dem Abstand zwischen dem RFID-Lesegerät 8 und dem RFID-Transponder 9 abhängt. Nach dem Empfangen der Identifikationsinformation kann diese einer Amplitude und damit einem Ort der jeweiligen Klammerspule 6 zugeordnet werden. Beispielsweise kann das Antwortsignal der Klammerspule 6 mit der höheren Amplitude der linken Klammerspule 6 zugeordnet sein, während das Antwortsignal mit der niedrigeren Amplitude der rechten Klammerspule 6 zugeordnet sein kann, da diese den größeren Abstand von der Schleifenantenne 81 aufweist.

Auf diese Weise kann durch ein einzelnes RFID-Lesegerät 8 erkannt werden, welche der Spulenaufnahmen 7 durch eine Klammerspule 6 belegt ist (Antwortsignal empfangen ja/nein) und welcher Art die Klammerspule 6 ist (anhand der Identifikationsinformation) und welche Identifikationsinformation zu der Klammerspule auf der linken und der rechten Spulenaufnahme 7 zugeordnet ist (anhand der Amplitude des Antwortsignals zu der entsprechenden Identifikationsinformation). Die Art der Klammerrohlinge 41 in der Klammerspule 6 ist durch die Identifikationsinformation angegeben und ergibt sich durch Auswerten des modulierten Antwortsignals entsprechend dem Manchester-Protokoll, das üblicherweise für RFID-Lesegeräte verwendet wird.

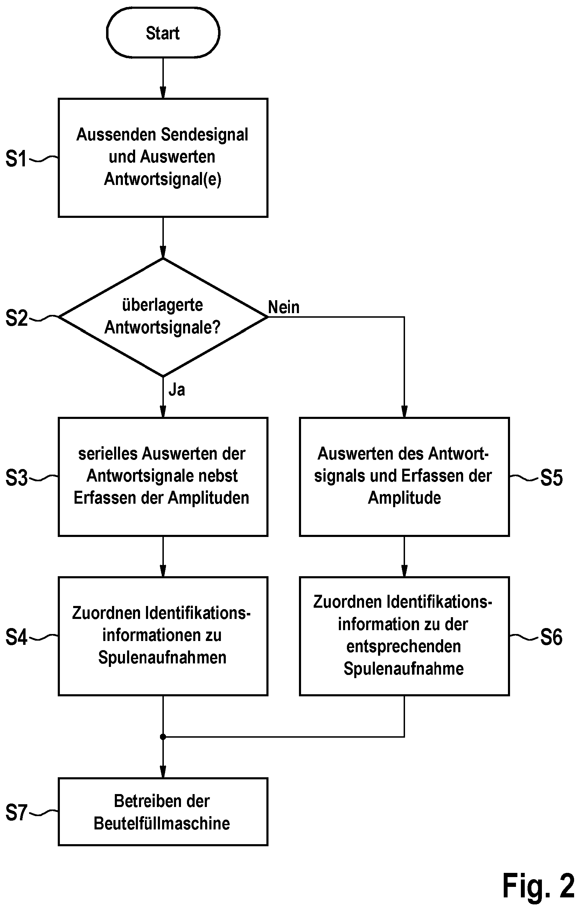

Die Beutelfüllmaschine 1 weist eine Steuereinheit 10 auf, die den Betrieb der Beutelfüllmaschine 1 gemäß einem Verfahren steuert, das anhand des Flussdiagramms der Figur 2 veranschaulicht ist.

Zunächst wird zu Betriebsbeginn der Produktionsmaschine in Schritt S1 mithilfe des RFID-Lesegeräts 8 ein Sendesignal ausgesendet und ggfs. modulierte Antwortsignale empfangen.

In Schritt S2 wird überprüft, ob sich überlagernde modulierte Antwortsignale empfangen wurden. Ist dies der Fall (Alternative: Ja), so wird in Schritt S3 entsprechend dem Manchester Protokoll die RFID-Transponder 9 seriell angesprochen, um nacheinander nur immer ein moduliertes Antwortsignal zu erhalten. Das jeweilige Antwortsignal wird ausgewertet, um die Identifikationsinformation zu erhalten und gleichzeitig die Amplitude des Antwortsignals erfasst.

In Schritt S4 werden die Identifikationsinformationen den Amplituden zugeordnet und jeweils ermittelt, ob die Amplitude dem geringeren Abstand zwischen RFID-Transponder 9 und RFID-Lesegerät 8 zugeordnet ist oder dem größeren Abstand. Dadurch kann die Identifikationsinformation eindeutig der jeweiligen Spulenaufnahme 7 zugeordnet werden.

Wird in Schritt S2 festgestellt, dass keine sich überlagernde modulierte Antwortsignale empfangen wurden, sondern nur ein Antwortsignal (Alternative: Nein), so wird in Schritt S5 das Antwortsignal ausgewertet, um die Identifikationsinformation zu erhalten und gleichzeitig die Amplitude des Antwortsignals erfasst.

In Schritt S6 wird die Identifikationsinformation der Amplitude zugeordnet und ermittelt, ob die Amplitude dem geringeren Abstand zwischen RFID-Transponder 9 und RFID-Lesegerät 8 zugeordnet ist oder dem größeren Abstand. Dadurch kann die Identifikationsinformation eindeutig der jeweiligen Spulenaufnahme 7 zugeordnet werden.

In Schritt S7 wird die Steuereinheit 10 abhängig von dem durch die Identifikationsinformationen identifizierten Art der Klammerspulen 6 betrieben. Dabei kann durch die Erkennung der Spulenaufnahme, in der die jeweilige Klammerspule 6 angeordnet ist, gewährleistet werden, dass die Steuereinheit 10 die Beutelfüllmaschine 1 so betreibt, dass der Verarbeitungsprozess die Art der Klammern 4 berücksichtigt.

Somit kann in der Steuereinheit 10 der Produktionsmaschine abhängig von der Amplitude bzw. den Amplituden des Antwortsignals erkannt werden, welche der Produktionsmittelaufnahmen belegt ist, und bei beidseitiger Belegung können durch eine nacheinander seriell erfolgende Auslesung der Identifikationsinformationen der RFID-Transponder 9 die einzelnen RFID-Transponder 9 der Produktionsmittel ausgelesen werden.

## Patentansprüche

1. Anordnung zur Identifikation eines oder mehrerer Produktionsmittel (6), die jeweils mit einem RFID-Transponder (9) versehen sind; umfassend:
- Ein RFID-Lesegerät (8) zum Anordnen an dem einen oder den mehreren Produktionsmitteln (6), das ausgebildet ist, um von jedem der RFID-Transponder (9) des einen oder der mehreren Produktionsmittel (6) jeweils ein Antwortsignal zu empfangen und jeweils die Amplitude des Antwortsignals zu erfassen;
- eine Steuereinheit (10), die ausgebildet ist, um abhängig von der Amplitude des jeweiligen Antwortsignals dem Produktionsmittel (6) eine Produktionsmittelaufnahme (7), in der dieses eingesetzt ist, oder eine Art oder Identifikation des Produktionsmittels (6) zuzuordnen.

2. Verwendung einer Anordnung nach Anspruch 1 in einer Produktionsmaschine (1), wobei die Amplitude und eine zugeordnete Identifikationsinformation des jeweiligen Antwortsignals durch das RFID-Lesegerät (8) erfasst wird, wobei die Amplitude jeder der Antwortsignale einer Produktionsmittelaufnahme (7) der Produktionsmaschine (1) zugeordnet wird, wobei die Produktionsmaschine (1) abhängig von der Art bzw. der Identifikation des jeweiligen Produktionsmittels (6), die durch die Identifikationsinformation bestimmt ist, und abhängig von der zugeordneten Produktionsmittelaufnahme (7) betrieben wird.

3. Produktionsmaschine (1) zur Herstellung oder Weiterverarbeitung eines Produktes mithilfe von verschiedenen Arten von Produktionsmitteln (6); umfassend:
- Mindestens zwei voneinander beabstandete Produktionsmittelaufnahmen (7), die jeweils ausgebildet sind, eine bestimmte Art eines Produktionsmittels (6) aufzunehmen, wobei das jeweilige Produktionsmittel (6) eines von mehreren Produktionsmitteln (6) der bestimmten Art ist;
- eine Anordnung nach Anspruch 1, wobei das RFID-Lesegerät (8) so zwischen den Produktionsmittelaufnahmen (7) angeordnet oder ausgebildet ist, um ein Antwortsignal eines an dem Produktionsmittel (6) angebrachten RFID-Transponder (9) zu empfangen, wobei das RFID-Lesegerät (8) so ausgebildet oder angeordnet ist, dass abhängig davon, in welcher der Produktionsmittelaufnahmen (7) das Produktionsmittel (6) angeordnet ist, das Antwortsignal mit unterschiedlicher Amplitude empfangen wird.

4. Produktionsmaschine (1) nach Anspruch 3, wobei das RFID-Lesegerät (8) eine Schleifenantenne (81) aufweist, die außerhalb der Mittenposition angeordnet ist, wobei die Mittenposition definiert ist, so dass die RFID-Transponder an den Produktionsmitteln (6) in einem in den Produktionsmittelaufnahmen (7) eingesetzten Zustand unterschiedliche Abstände zu der Schleifenantenne (81) aufweisen.

5. Produktionsmaschine (1) nach Anspruch 3 oder 4, wobei das RFID-Lesegerät (8) eine Schleifenantenne (81) aufweist, die einseitig mit einem Abschirmungselement versehen ist, wobei das Abschirmungselement insbesondere eine Schicht oder Struktur mit einem elektrischen Widerstand aufweist, so dass aufgrund einer Signaldämpfung Antwortsignale von den RFID-Transpondern (9) an den Produktionsmitteln (6) in einem in die Produktionsmittelaufnahmen (7) )eingesetzten Zustand unterschiedliche Signalstärken haben.

6. Produktionsmaschine (1) nach einem der Ansprüche 3 bis 5, wobei das Produktionsmittel (6) ein Werkzeug oder ein Versorgungsmaterial umfasst.

7. Produktionsmaschine (1) nach einem der Ansprüche 3 bis 6, wobei das RFID-Lesegerät (8) ausgebildet ist, die Amplitude des Antwortsignals und eine zugeordnete Identifikationsinformation zu erfassen, wobei eine Steuereinheit (10) ausgebildet ist, um abhängig von der Amplitude des Antwortsignals dem Produktionsmittel (6) eine Produktionsmittelaufnahme (7), in der diese eingesetzt ist, zuzuordnen und die Produktionsmaschine (1) abhängig von der Art des jeweiligen Produktionsmittels (6), die durch die Identifikationsinformation bestimmt ist, zu betreiben.

8. Verfahren zum Betreiben einer Produktionsmaschine (1) zur Herstellung oder Weiterverarbeitung eines Produktes mithilfe von verschiedenen Arten von Produktionsmitteln (6), wobei die Produktionsmaschine (1) mindestens zwei voneinander beabstandete Produktionsmittelaufnahmen (7) umfasst, die jeweils ausgebildet sind, eine bestimmte Art eines Produktionsmittels (6) aufzunehmen, wobei das jeweilige Produktionsmittel (6) eines von mehreren Produktionsmitteln (6) der bestimmten Art ist und weiterhin ein RFID-Lesegerät (8) umfasst, das so zwischen den Produktionsmittelaufnahmen (7) angeordnet oder ausgebildet ist, um ein Antwortsignal eines an dem Produktionsmittel (6) angebrachten RFID-Transponder (9) zu empfangen, wobei das RFID-Lesegerät (8) so ausgebildet oder angeordnet ist, dass abhängig davon, in welcher der Produktionsmittelaufnahmen (7) das Produktionsmittel (6) angeordnet ist, das Antwortsignal mit unterschiedlicher Amplitude empfangen wird; mit folgenden Schritten:
- Erfassen der Amplitude des Antwortsignals eines oder mehrerer RFID-Transponder (9);
- Zuordnen des Antwortsignals zu dem Produktionsmittel (6) in der durch die Amplitude bestimmten Produktionsmittelaufnahme (7),
- Betreiben der Produktionsmaschine (1) abhängig von der Art des jeweiligen Produktionsmittels (6), die durch die Identifikationsinformation bestimmt ist, und abhängig von der zugeordneten Produktionsmittelaufnahme (7).

## Claims

1. An arrangement for identifying one or more production resources (6), each of which is provided with an RFID transponder (9), comprising:
- an RFID reader (8) for arrangement on the one or more production resources (6), wherein RFID reader (8) is configured to receive in each case a response signal from each of the RFID transponders (9) of the one or more production resources (6) and to detect in each case the amplitude of the response signal;
- a control unit (10) which is configured to assign to the production resource (6), depending on the amplitude of the respective response signal, a production resource receptacle (7) in which the production resource is inserted, or a type or an identification of the production resource (6).

2. Use of an arrangement according to claim 1 in a production machine (1), wherein the amplitude and associated identification information of the respective response signal are detected by the RFID reader (8), wherein the amplitude of each of the response signals is assigned to a production resource receptacle (7) of the production machine (1), wherein the production machine (1) is operated depending on the type or the identification of the respective production resource (6), the type or the identification being determined by the identification information, and depending on the assigned production resource receptacle (7).

3. A production machine (1) for producing or further processing a product by means of different types of production resources (6), comprising:
- at least two production resource receptacles (7) spaced apart from one another, each of which is configured to receive a particular type of production resource (6), wherein the respective production resource (6) is one of a plurality of production resources (6) of the particular type;
- an arrangement according to claim 1, wherein the RFID reader (8) is arranged or configured between the production resource receptacles (7) so as to receive a response signal of an RFID transponder (9) attached to the production resource (6), wherein the RFID reader (8) is configured or arranged such that the response signal is received with a different amplitude depending on in which of the production resource receptacles (7) the production resource (6) is arranged.

4. The production machine (1) according to claim 3, wherein the RFID reader (8) has a loop antenna (81) which is arranged outside the centre position, wherein the centre position is defined, so that the RFID transponders on the production resources (6), in a state inserted into the production resource receptacles (7), are at different distances from the loop antenna (81).

5. The production machine (1) according to claim 3 or 4, wherein the RFID reader (8) has a loop antenna (81) which is provided on one side with a shielding element, wherein the shielding element in particular has a layer or structure with an electrical resistance, so that, due to signal attenuation, response signals from the RFID transponders (9) on the production resources (6), in a state inserted into the production resource receptacles (7), have different signal strengths.

6. The production machine (1) according to any one of claims 3 to 5, wherein the production resource (6) comprises a tool or a supply material.

7. The production machine (1) according to any one of claims 3 to 6, wherein the RFID reader (8) is configured to detect the amplitude of the response signal and associated identification information, wherein a control unit (10) is configured to assign to the production resource (6), depending on the amplitude of the response signal, a production resource receptacle (7) in which the production resource is inserted, and to operate the production machine (1) depending on the type of the respective production resource (6), the type being determined by the identification information.

8. A method for operating a production machine (1) for producing or further processing a product by means of different types of production resources (6), wherein the production machine (1) comprises at least two production resource receptacles (7) spaced apart from one another, each of which is configured to receive a particular type of production resource (6), wherein the respective production resource (6) is one of a plurality of production resources (6) of the particular type, and further comprises an RFID reader (8) which is arranged or configured between the production resource receptacles (7) so as to receive a response signal of an RFID transponder (9) attached to the production resource (6), wherein the RFID reader (8) is configured or arranged such that the response signal is received with a different amplitude depending on in which of the production resource receptacles (7) the production resource (6) is arranged, comprising the following steps:
- detecting the amplitude of the response signal of one or more RFID transponders (9);
- assigning the response signal to the production resource (6) in the production resource receptacle (7) determined by the amplitude;
- operating the production machine (1) depending on the type of the respective production resource (6), the type being determined by the identification information, and depending on the assigned production resource receptacle (7).

## Revendications

1. Agencement pour l'identification d'un ou de plusieurs moyens de production (6) qui sont chacun munis d'un transpondeur RFID (9), comprenant :
- un lecteur RFID (8) destiné à être agencé sur le ou les moyens de production (6), qui est conçu pour recevoir respectivement un signal de réponse de chacun des transpondeurs RFID (9) du ou des moyens de production (6) et pour détecter respectivement l'amplitude du signal de réponse ;
- une unité de commande (10) qui est conçue pour associer au moyen de production (6), en fonction de l'amplitude du signal de réponse respectif, un logement de moyen de production (7) dans lequel le moyen de production est inséré, ou un type ou une identification du moyen de production (6).

2. Utilisation d'un agencement selon la revendication 1 dans une machine de production (1), dans laquelle l'amplitude et une information d'identification associée du signal de réponse respectif sont détectées par le lecteur RFID (8), dans laquelle l'amplitude de chacun des signaux de réponse est associée à un logement de moyen de production (7) de la machine de production (1), dans laquelle la machine de production (1) est exploitée en fonction du type ou de l'identification du moyen de production (6) respectif, le type ou l'identification étant déterminés par l'information d'identification, et en fonction du logement de moyen de production (7) associé.

3. Machine de production (1) pour la fabrication ou la transformation ultérieure d'un produit au moyen de différents types de moyens de production (6), comprenant :
- au moins deux logements de moyen de production (7) espacés les uns des autres, qui sont chacun conçus pour recevoir un type déterminé de moyen de production (6), le moyen de production (6) respectif étant l'un de plusieurs moyens de production (6) du type déterminé ;
- un agencement selon la revendication 1, dans lequel le lecteur RFID (8) est agencé ou conçu entre les logements de moyen de production (7) de manière à recevoir un signal de réponse d'un transpondeur RFID (9) fixé sur le moyen de production (6), dans lequel le lecteur RFID (8) est conçu ou agencé de telle sorte que le signal de réponse est reçu avec une amplitude différente selon le logement de moyen de production (7) dans lequel le moyen de production (6) est agencé.

4. Machine de production (1) selon la revendication 3, dans laquelle le lecteur RFID (8) présente une antenne en boucle (81) qui est agencée en dehors de la position centrale, la position centrale étant définie, de telle sorte que les transpondeurs RFID sur les moyens de production (6), dans un état inséré dans les logements de moyen de production (7), présentent des distances différentes par rapport à l'antenne en boucle (81).

5. Machine de production (1) selon la revendication 3 ou 4, dans laquelle le lecteur RFID (8) présente une antenne en boucle (81) qui est munie d'un élément de blindage sur un côté, l'élément de blindage présentant en particulier une couche ou une structure ayant une résistance électrique, de telle sorte que, en raison d'une atténuation du signal, des signaux de réponse des transpondeurs RFID (9) sur les moyens de production (6), dans un état inséré dans les logements de moyen de production (7), présentent des intensités de signal différentes.

6. Machine de production (1) selon l'une quelconque des revendications 3 à 5, dans laquelle le moyen de production (6) comprend un outil ou un matériau d'approvisionnement.

7. Machine de production (1) selon l'une quelconque des revendications 3 à 6, dans laquelle le lecteur RFID (8) est conçu pour détecter l'amplitude du signal de réponse et une information d'identification associée, dans laquelle une unité de commande (10) est conçue pour associer au moyen de production (6), en fonction de l'amplitude du signal de réponse, un logement de moyen de production (7) dans lequel le moyen de production est inséré, et pour exploiter la machine de production (1) en fonction du type du moyen de production (6) respectif, le type étant déterminé par l'information d'identification.

8. Procédé d'exploitation d'une machine de production (1) pour la fabrication ou la transformation ultérieure d'un produit au moyen de différents types de moyens de production (6), la machine de production (1) comprenant au moins deux logements de moyen de production (7) espacés les uns des autres, qui sont chacun conçus pour recevoir un type déterminé de moyen de production (6), le moyen de production (6) respectif étant l'un de plusieurs moyens de production (6) du type déterminé, et comprenant en outre un lecteur RFID (8) qui est agencé ou conçu entre les logements de moyen de production (7) de manière à recevoir un signal de réponse d'un transpondeur RFID (9) fixé sur le moyen de production (6), le lecteur RFID (8) étant conçu ou agencé de telle sorte que le signal de réponse est reçu avec une amplitude différente selon le logement de moyen de production (7) dans lequel le moyen de production (6) est agencé, comprenant les étapes suivantes :
- détection de l'amplitude du signal de réponse d'un ou de plusieurs transpondeurs RFID (9) ;
- association du signal de réponse au moyen de production (6) dans le logement de moyen de production (7) déterminé par l'amplitude ;
- exploitation de la machine de production (1) en fonction du type du moyen de production (6) respectif, le type étant déterminé par l'information d'identification, et en fonction du logement de moyen de production (7) associé.
